# EUROPEAN PATENT SPECIFICATION

(11) **EP 3 030 789 B1**
(45) Date of publication and mention of the grant of the patent: **08.05.2019**
(21) Application number: 14739532.1
(22) Date of filing: 09.07.2014
(51) Int. Cl.: F04D 19/04, F04D 29/60

(54) **VACUUM SYSTEM SECURING DEVICES**
BEFESTIGUNGSEINRICHTUNG FÜR VAKUUMPUMPEN
DISPOSITIF DE FIXATION POUR POMPES A' VIDE

(30) Priority: 09.08.2013 GB 201314282
(43) Date of publication of application: 15.06.2016
(73) Proprietor: Edwards Limited, Burgess Hill West Sussex RH15 9TW (GB)
(72) Inventor: COBBETT, Andrew, Burgess Hill Sussex RH15 9TW (GB)
(74) Representative: Norton, Ian Andrew
(86) International application number: PCT/GB2014/052099
(87) International publication number: WO 2015/019046

(56) References cited:
- EP-A2- 2 228 540
- US-A1- 2010 150 648

## Description

### Field of the Invention

The invention relates vacuum system securing devices able to secure a sealed connection between two parts of a vacuum system.

### Background to the Invention

In vacuum systems it is often necessary to form a sealed connection between two parts, or devices. For example, a vacuum pump may be connected with an analysing device such as a mass spectrometer. The vacuum pump may be used to evacuate one or more chambers in the mass spectrometer and this requires a sealed connection(s) between the vacuum pump and the mass spectrometer.

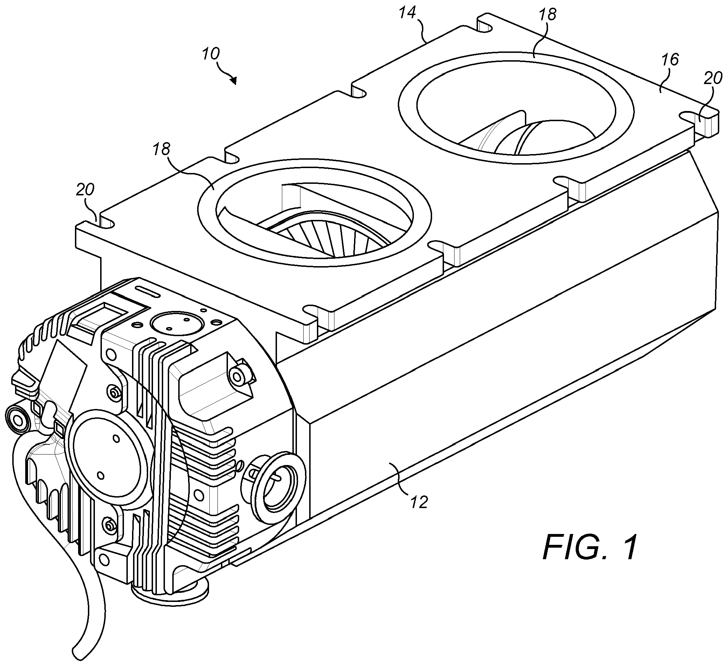

Figure 1 is a perspective view of a turbo molecular pump 10 that may be connected to a mass spectrometer to evacuate a plurality of chambers in the mass spectrometer, for example as disclosed in WO2006/000745. The pump 10 comprises a pump body 12 provided with a flange 14. The flange 14 has a planar face 16 provided with grooves 18 for respective sealing elements, such as O-rings. The flange 14 is provided with a plurality of apertures 20 through which respective fastening elements, for example bolts, can be inserted into respective threaded apertures provided in a flange or other planar surface of the mass spectrometer. The longitudinal axis of the fastening elements extends perpendicular to the plane of the planar face 16.

The pump 10 may be located on the underside of, or other locations on, the mass spectrometer that are relatively difficult to access. This may give rise to difficulties both at the initial installation stage and subsequently in the event the pump requires replacement or repair, or the sealing element between the pump and mass spectrometer requires replacement. It is also necessary to perform individual tightening operations to tighten and secure each bolt, which can be particularly time-consuming if the bolt heads are difficult to access.

EP2228540 describes a system for joining a vacuum pump to a chamber.

### Summary of the Invention

The invention provides a vacuum system securing device as specified in claim 1.

The invention also includes a method of sealing a sealed connection between two parts of a vacuum system as specified in claim 6.

### Brief Description of the Drawings

In the following disclosure, reference will be made to the drawings, in which:
- Figure 1 is a perspective view of a known vacuum pump which is not part of the invention;
- Figure 2 is a perspective view of a vacuum system securing device;
- Figure 3 is an exploded perspective view of the vacuum system securing device of Figure 2;
- Figure 4 is a section on line IV-IV in Figure 2 showing the vacuum system securing device in a first operating condition;
- Figure 5 is a view corresponding to Figure 4 showing the vacuum system securing device in a second operating condition;
- Figure 6 is a schematic end elevation of a mass spectrometer comprising a first part of a vacuum system and two vacuum system securing devices;
- Figure 7 is a schematic side elevation of the mass spectrometer of Figure 6;
- Figure 8 is a schematic view corresponding to Figure 6 showing a turbo molecular vacuum pump comprising a second part of the vacuum system assembled to the mass spectrometer;
- Figure 9 is an enlarged view of the vacuum system showing one of the vacuum system securing devices in the operating condition of Figure 4; and
- Figure 10 is a view corresponding to Figure 9 showing the vacuum system securing device in the operating condition of Figure 5.

### Detailed Description

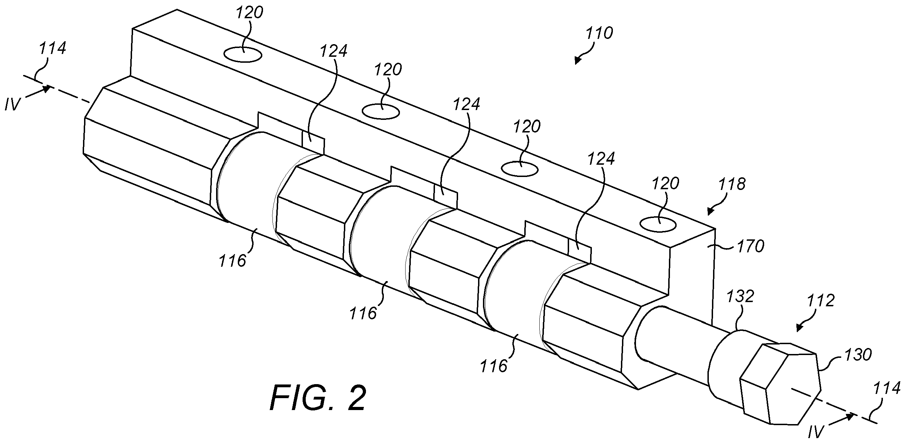

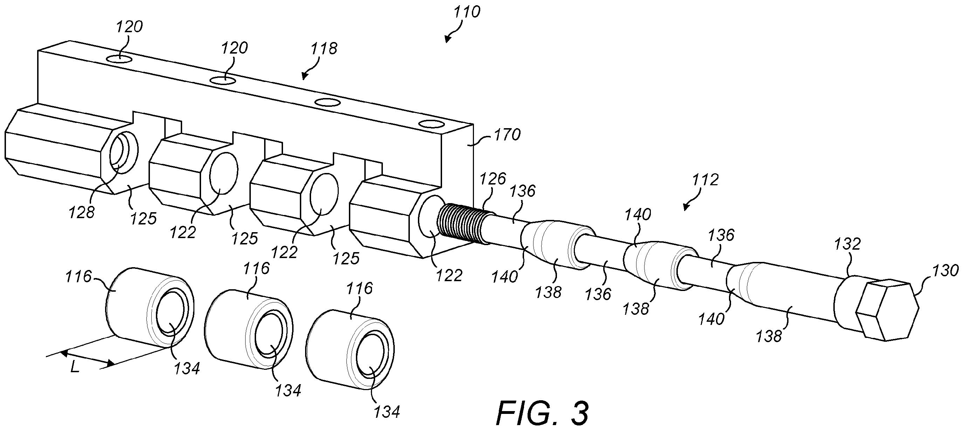

Referring to Figures 2 and 3, a vacuum system securing device 110 to releasably secure a sealed connection between a first part and a second part of a vacuum system comprises a shaft 112 having a longitudinal axis, which in this example is an axis of rotation 114. The shaft 112 is provided with a plurality of force applying members 116. In use, the shaft 112 is attached to the first part of the vacuum system to define a gap between the first part and the force applying members 116 to receive the second part. The shaft 112 is rotatable about the axis of rotation 114 to cause the force applying members 116 to narrow the gap to apply a force that presses the second part towards the first part.

The vacuum system securing device 110 further comprises a mounting 118 by which the shaft 112 can be mounted to the first part of the vacuum system. In the illustrated example, the mounting 118 is provided with a plurality of through-holes 120 to permit it to be releasably secured to the first part of a vacuum system by means of bolts, screws or the like.

The mounting 118 has a generally L-shaped cross-section and is provided with a bore 122 in which the shaft 112 is partially received. The mounting 118 is provided with a plurality of apertures 124 that extend transversely with respect to the bore 122 so as to divide it into sections and provide respective spaces to receive the force applying members 116. In the axial direction of the bore 122, the apertures 124 have a width W defined by opposed faces 125. The width W corresponds substantially to the length L of the force applying members 116 so that the force applying members can move transversely of the bore 122, but are constrained against any substantial movement in the axial direction of the bore.

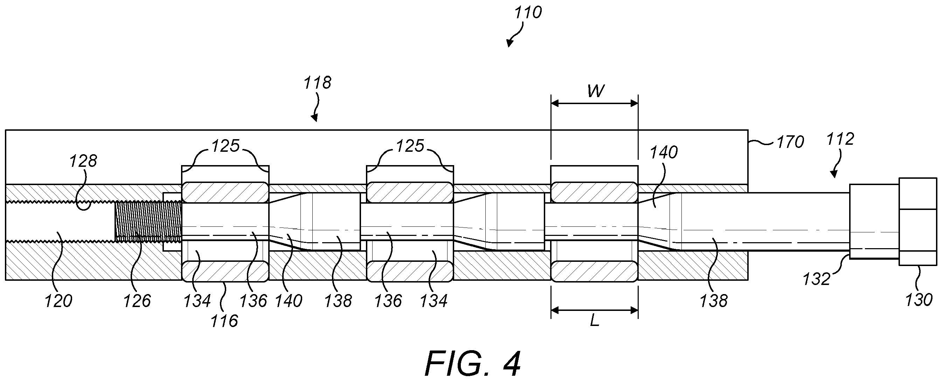

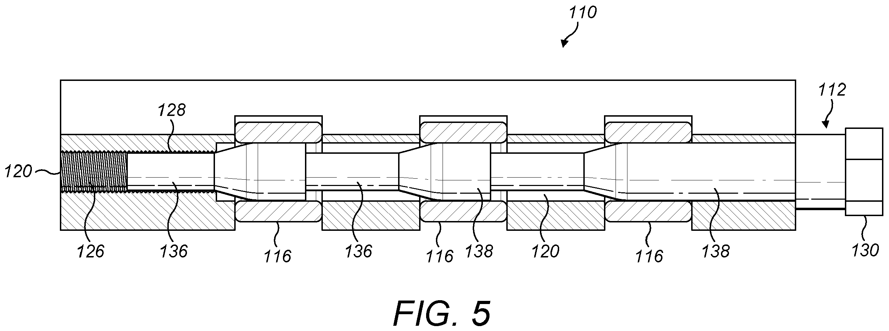

A first end of the shaft 112 is provided with threading 126, which in the illustrated example is male threading configured to engage in female threading 128 (best seen in Figures 4 and 5) provided in an end section of the bore 122. A second end of the shaft 112 is provided with a drive head 130 and a shoulder defining a stop surface 132. In the illustrated example, the drive head 130 is a hexagonal head to allow the application of a rotational force to the shaft 112 by means of a spanner (wrench) or the like. In other examples, the drive head may alternatively, or additionally, incorporate a socket to receive a suitably shaped drive member, such as an Allen (hex) key, and in principle the drive head may be configured in any desired way so as to be able to receive a rotational input force to turn the shaft 112 about the axis of rotation 114.

The force applying members 116 are annular bodies defining respective through-holes 134 to receive the shaft 112. Although not essential, as they may be made of metal or any other suitable material, in the illustrated example the force applying members 116 are made from an engineering plastics such as nylon.

The shaft 112 has respective first diameter portions 136 for the force applying members 116 that separate respective associated second diameter portions 138. The second diameter portions 138 have a larger diameter than the first diameter portions 136. The diameter of the second diameter portions 138 corresponds substantially to the diameter of the through-holes 134 so that the force applying members 116 are a close sliding fit on the second diameter portions. Adjacent first and second diameter portions 136, 138 are joined by respective conical sections 140. As will be described in more detail below, when the shaft 112 is screwed into the bore 122, it translates relative to the force applying members 116 in the axial direction of the bore. As shown in Figures 4 and 5, this axial translation moves the first diameter portions 136 out of alignment with the force applying members 116 and brings the force applying members into engagement with the respective second diameter portions 138. The engagement of the force applying members 116 by the second diameter portions 138 causes a radial movement of the force applying members with respect to the shaft 112. The radial movement of the force applying members 116 is guided by the opposing faces 125 of the apertures 124. The conical sections 140 assist in providing a smooth transition as the second diameter portions 138 move into engagement with the through-holes 134 of the force applying members.

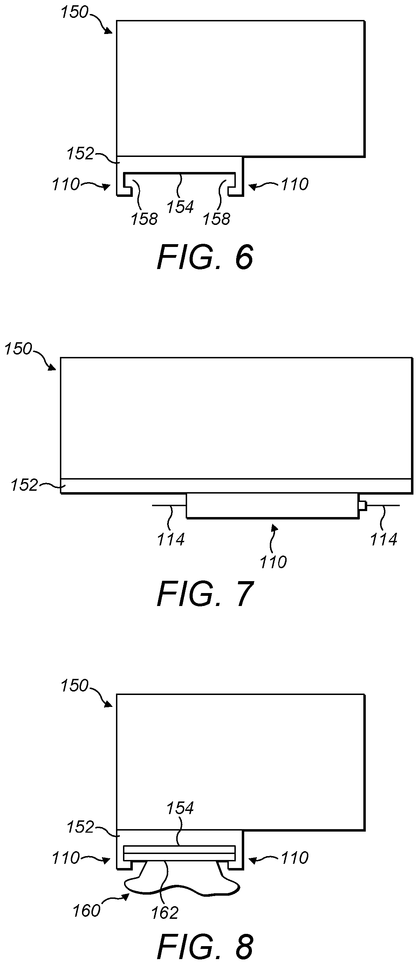

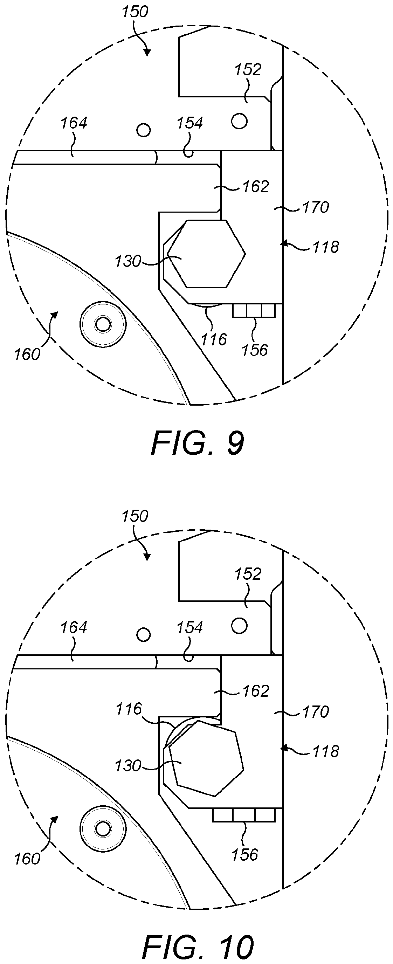

Referring to Figures 6 to 10, a mass spectrometer 150 comprises a first part of a vacuum system in the form of a member 152 that has a planar surface 154 that forms an underside of the mass spectrometer. Two vacuum system securing devices 110 are secured to the planar surface 154 by means of bolts 156 (Figures 9 and 10) extending through the through-holes 120 of the respective mountings 118 and engaging in threaded apertures (not shown) provided in the member 152. Respective gaps 158 are defined between the planar surface 154 and the force applying members 116 of the vacuum system securing devices 110.

Referring to Figures 8 to 10, the vacuum system further comprises a turbo molecular vacuum pump 160. The vacuum pump 160 comprises a second part of the vacuum system in the form of a flange 162. The vacuum pump 160 is secured to the mass spectrometer 150 for evacuating a plurality of chambers in the mass spectrometer, for example as described in WO2006/000745. The flange 162 may have a groove or other suitable formation (not shown) to partially receive a sealing element 164 (Figures 9 and 10). The sealing element 164 may take the form of an O-ring or any other sealing element suitable for sealing a connection between two parts of a vacuum system.

Referring to Figures 6 to 8, the vacuum pump 160 is assembled to the mass spectrometer 150 by inserting the flange 162 into the gaps 158 defined by the vacuum system securing devices 110. The vacuum system securing devices 110 define a guide way 166 along which the flange 162 is moved generally parallel to the axis 114 to assemble the vacuum pump 162 to the mass spectrometer 150. Once assembled, the sealing element 164 is in engagement with the planar surface 154, but with insufficient pressure to form a vacuum seal. The vacuum system securing devices 110 are then operated to secure the flange 162 to the member 152 with a vacuum seal between them.

The operation of the vacuum system securing devices 110 is the same for each so for economy of presentation, operation of only one will be described here. A wrench (not shown) is applied to the drive head 130 and used to apply a torque to the shaft 112 to rotate it about the axis 114. The rotation of the shaft 112 causes it to translate axially in the bore 122 moving it from the position shown in Figure 4 to the position shown in Figure 5. This moves the first diameter portions 136 out of alignment with the force applying members 116, which are brought into engagement with the second diameter portions 138. As the respective conical sections 140 and, subsequently, the second diameter portions 138 engage the force applying members 116, the force applying members move radially with respect to the axis 114 guided by the opposed faces 125 of the respective apertures 124. The engagement of the stop surface 132 with the opposed end face 170 of the mounting 118 provides an indication that the second diameter portions 138 are engaging the force applying members 116 and the connection is sealed and secured. As can be seen from a comparison of Figures 9 and 10, this movement of the force applying members 116 narrows the gap 158 between the member 152 and flange 162 to increase the pressure applied to the sealing element 164 to seal the connection between the two parts.

If the sealed connection between the mass spectrometer 150 and vacuum pump 160 needs to be released in order to permit repair to either part or replacement of the pump or sealing element 164, this can be accomplished by simply rotating the shaft 112 in the opposite direction to bring the first diameter portions 136 back is into alignment with the force applying members 116, so that the force applying members can move away from the member 152 thereby increasing the size of the gap 158 to allow removal of the vacuum pump. In the illustrated example, once in alignment with the first diameter portions 136, the force applying members 116 will tend to drop away from the member 152 under the influence of gravity thereby widening the gap 158. Although in the illustrated example the vacuum system securing device is releasably secured to the first part of the vacuum system by means of bolts, it will be understood that the mounting may be attached to the vacuum system in any convenient way and it is not essential that the mounting is releasably securable to the vacuum system. For example, at least a part of the mounting may be an integral part of the vacuum system or permanently secured to the vacuum system by means of welding or the like.

In the illustrated example, the force applying members are separate from the shaft and the shaft is configured to actuate the force applying members by a camming action obtained by an axial sliding movement of the shaft relative to the force applying members. The axial sliding movement of the shaft is obtained by rotating the shaft about its longitudinal axis. In other examples which are not part of the invention, the shaft may be axially slidable only. A shaft that is axially slidable only may be spring biased to a position in which the force applying members are axially aligned with the first diameter portions of the shaft and slidable to a position in which the second diameter portions are at least partially received in the force applying members by an axially directed force applied by, for example, a separate rotatable member. Thus, for example, the threading 126 of the illustrated shaft 112 could be omitted and the shaft driven by a thumbscrew engaging in threading in the section of the bore 122 nearest the drive head 130.

In other examples which are not part of the invention, the force applying members may be integral with the shaft so that they rotate when the shaft is rotated. The force applying members may, for example, be discs mounted eccentrically with respect to the longitudinal axis of the shaft. In such an example, portions of the periphery of the discs disposed radially closer to the longitudinal axis of the shaft may be positioned opposite the first part of the vacuum system to define a gap to allow the second part of the vacuum system to be assembled the first part and the shaft then rotated to bring portions of the periphery of the discs disposed radially further from the longitudinal axis into position to narrow the gap and thereby cause the second part to be pressed towards the first part.

In the illustrated example, there is just one sealing element between the two parts of the sealed connection. It will be understood that this is not essential and that there may be a plurality of sealing elements sealing respective discrete flow paths between the two parts.

In the illustrated example, the force applying members are disposed in axially spaced apart relation on the shaft and when actuated they substantially simultaneously increase the pressure applied to the opposed portions of the first part of the vacuum system. The force applying members act in unison so there is a substantially even pressure applied by the vacuum securing device to the first part along the length of the vacuum securing device. In other examples, the force applying members may apply a force in a staggered fashion. For example, the shaft may be configured so that the second diameter portions engage the respective force applying members one after another in a predetermined order, or rotatable force applying members may be configured to increase the applied pressure in a sequential manner.

In the illustrated example there are three force applying members. It is to be understood that the number of force applying members can be selected based on the length to be sealed and desired separation between the positions at which force is applied.

It is to be understood that the illustrated vacuum system securing device facilitates the assembly of parts to a vacuum system in positions in which this might be extremely difficult using a conventional vacuum system securing device, such as a series of bolts penetrating a flange as illustrated in Figure 1. The vacuum system securing device allows the insertion of a part between two surfaces in a direction generally parallel to the two surfaces and generally parallel to the longitudinal axis of the shaft of the vacuum system securing device. The vacuum system securing device can be positioned such that the end at which drive is applied to the shaft is to one side of a space defined between the two surfaces so that it can be easily accessed. Thus, in cases in which one of the surfaces is the ground or some other surface on which the apparatus or system is supported, parts of an apparatus, or system, do not have to be raised as they would need to be using a conventional arrangement as shown in Figure 1. In cases in which the two surfaces are each parts of an apparatus or a system, it is not necessary to dismantle the apparatus, or system, to access securing bolts as it would be using the conventional arrangement shown in Figure 1. In general, the vacuum system securing device allows the possibility of placing the driven end of the securing device at an accessible location to one side of a space to allow one part to be secured to another part when access to the space is restricted such as to make it difficult, or impossible, to use the conventional arrangement shown in Figure 1.

It is to be understood that the illustrated vacuum system securing device provides advantages in terms of speed of assembly of two parts. Using a conventional vacuum system securing device comprising bolts extending through a flange as shown in Figure 1, it is necessary to tighten each bolt individually. Thus, in the example shown in Figure 1, it is necessary to carry out six tightening operations. Using two of the illustrated vacuum system securing devices, one disposed on each side of the flange in parallel spaced apart relation, instead of conventional bolts would require just two tightening operations and yet still produce the six applied forces achieved using six bolts so that respective forces can be applied at spaced apart locations along a desired length of a part by a significantly smaller number of tightening operations.

In the illustrated example, the vacuum system securing device is used to secure a turbo molecular pump to a mass spectrometer. It will be appreciated that application of the securing device is not so limited and that in principle it may be used in securing connections between any two parts that are to be clamped to one another and one of which comprises a relatively thin flange-like portion that can be received in the gap defined between the force applying members and the other part. For example, the securing device could be used to secure the mass spectrometer chamber to its time of flight (TOF) tube. It is not essential that a seal is formed between the parts secured to one another by the securing device, which could, for example, be used to secure covers, lids or the like to housings.

The invention has been disclosed with reference to vacuum systems and securing a sealed connection between two parts of a vacuum system. It is to be understood that the application is not so limited and the securing device may be used to secure connections between two parts of a vacuum system that are not sealed and more generally to two parts that are simply to be released to be secured to one another.

## Claims

1. A vacuum system securing device (110) to releasably secure a first part (150) of a vacuum system to a second part (160) of the vacuum system, said securing device comprising a shaft (112) having a longitudinal axis and provided with a plurality of force applying members (116), said shaft to be attached to said first part to define a gap between said first part and said force applying members to receive said second part by a movement of said second part in a lengthways direction of said shaft; and said shaft movable relative to said first part to cause said force applying members to narrow said gap to apply a force pressing said second part towards said first part, **characterized in that** the relative movement of said shaft to said first part comprises rotation of said shaft about said longitudinal axis and axial translation of the shaft; and wherein said force applying members (116) are annular bodies defining respective through-holes (134) to receive said shaft (112); and wherein said shaft extends through respective through-holes (134) of said force applying members (116) and has respective first (136) and second (138) diameter portions associated with said force applying members, said second diameter portions being larger than said first diameter portions, whereby axial translation of said shaft relative to said force applying members can move said shafts from a position in which said first diameter portions are received in the respective through-holes (134) to a position in which said second diameter portions are received in the through-holes to cause said radially outward movement of the force applying members.

2. A vacuum system securing device as claimed in claim 1, wherein said shaft (112) and force applying members (116) are configured to apply said pressing force in a radially outward direction with respect to said longitudinal axis.

3. A vacuum system securing device claimed in claim 1, wherein said shaft is provided with threading (126) engageable with threading (128) attached to said first part whereby said rotation of said shaft about said longitudinal axis causes said axial translation of said shaft.

4. A vacuum system securing device claimed in any preceding claim, further comprising a mounting (118) for said shaft that is securable to said first part, said mounting defining a bore (122) in which said shaft is at least partially received and being provided with respective apertures (124) through which said force applying members protrude, said apertures being configured to restrict movement of said force applying members in directions parallel to said longitudinal axis, and wherein said apertures are each partially defined by opposed faces (125) that restrict movement of said force applying members in said directions parallel to said longitudinal axis.

5. A vacuum system comprising a first part (150), a second part (160) and a securing device (110) according to any preceding claim for releasably securing said first part to said second part.

6. A method of securing a connection between two parts of a vacuum system using a vacuum securing device according to any of the claims 1 to 4, said method comprising:
mounting a shaft having a longitudinal axis and provided with a plurality of force applying members to a first part of said vacuum system to define the gap between said force applying members and said first part;
moving a second part of said vacuum system into said gap along a path substantially parallel to said longitudinal axis; and
moving said shaft relative to said first part to cause said force applying members to narrow said gap and press said second part towards said first part to apply pressure to said sealing element, whereby moving said shaft relative to said first part comprises rotating said shaft about said longitudinal axis and axially translating said shaft.

## Patentansprüche

1. Vakuumsystem-Befestigungsvorrichtung (110) zum lösbaren Befestigen eines ersten Teils (150) eines Vakuumsystems an einem zweiten Teil (160) des Vakuumsystems, wobei die Befestigungsvorrichtung eine Welle (112) aufweist, die eine Längsachse hat und mit einer Mehrzahl von Kraftausübungsteilen (116) versehen ist, wobei die Welle an dem ersten Teil zu befestigen ist, um einen Spalt zwischen dem ersten Teil und den Kraftausübungsteilen zu definieren, um den zweiten Teil durch eine Bewegung des zweiten Teils in Längsrichtung der Welle aufzunehmen; und wobei die Welle relativ zu dem ersten Teil beweglich ist, um zu bewirken, dass die Kraftausübungsteile den Spalt verengen, um eine den zweiten Teil gegen den ersten Teil pressende Kraft auszuüben, **dadurch gekennzeichnet, dass** die Relativbewegung der Welle zum ersten Teil eine Drehung der Welle um ihre Längsachse und eine Axialverschiebung der Welle umfasst, und wobei die Kraftausübungsteile (116) Ringkörper sind, die jeweils Durchgangsöffnungen (134) zur Aufnahme der Welle (112) bilden; und wobei die Welle durch jeweilige Durchgangsöffnungen (134) der Kraftausübungsteile (116) hindurchverläuft und erste (136) und zweite (138) Durchmesserteile aufweist, die den Kraftausübungsteilen zugeordnet sind, wobei die zweiten Durchmesserteile größer sind als die ersten Durchmesserteile, wodurch eine Axialverschiebung der Welle relativ zu den Kraftausübungsteilen die Welle aus einer Position, in welcher die ersten Durchmesserteile in den jeweiligen Durchgangsöffnungen (134) aufgenommen sind, in eine Position bewegen kann, in welcher die zweiten Durchmesserteile in den Durchgangsöffnungen aufgenommen werden, um die radiale Auswärtsbewegung der Kraftausübungsteile zu bewirken.

2. Vakuumsystem-Befestigungsvorrichtung nach Anspruch 1, wobei die Welle (112) und die Kraftausübungsteile (116) dafür konfiguriert sind, die Presskraft in einer radialen Auswärtsrichtung mit Bezug auf die genannte Längsachse auszuüben.

3. Vakuumsystem-Befestigungsvorrichtung nach Anspruch 1,wobei die Welle mit einem Gewinde (126) versehen ist, das mit einem Gewinde (128) an dem ersten Teil in Eingriff bringbar ist, wodurch die Drehung der Welle um die genannte Längsachse die genannte Axialverschiebung der Welle bewirkt.

4. Vakuumsystem-Befestigungsvorrichtung nach irgendeinem vorhergehenden Anspruch, die weiter eine Halterung (118) für die Welle aufweist, die am ersten Teil befestigbar ist, wobei die Halterung eine Bohrung (122) definiert, in welcher die Welle mindestens teilweise aufgenommen wird, und die mit jeweiligen Öffnungen (124) versehen ist, durch welche die Kraftausübungsteile vorspringen, wobei die Öffnungen dafür konfiguriert sind, eine Bewegung der Kraftausübungsteile in Richtungen parallel zu der Längsachse zu beschränken, und wobei die Öffnungen jeweils teilweise durch gegenüberliegende Flächen (125) definiert sind, welche eine Bewegung der Kraftausübungsteile in den genannten Richtungen parallel zu der Längsachse beschränken.

5. Vakuumsystem, das einen ersten Teil (150) und einen zweiten Teil (160) und eine Befestigungsvorrichtung (110) nach irgendeinem vorhergehenden Anspruch zur lösbaren Befestigung des ersten Teils am zweiten Teil umfasst.

6. Verfahren zum Befestigen einer Verbindung zwischen zwei Teilen eines Vakuumsystems unter Verwendung einer Vakuumbefestigungsvorrichtung nach einem der Ansprüche 1 bis 4, wobei das Verfahren umfasst:
Montieren einer Welle, die eine Längsachse aufweist und mit einer Mehrzahl von Kraftausübungsteilen versehen ist, an einem ersten Teil des Vakuumsystems, um den Spalt zwischen den Kraftausübungsteilen und dem ersten Teil zu definieren;
Bewegen eines zweiten Teils des Vakuumsystems in den Spalt entlang eines Pfads im wesentlichen parallel zu der Längsachse; und
Bewegung der Welle relativ zu dem ersten Teil, um zu bewirken, dass die Kraftausübungsteile den Spalt verengen und den zweiten Teil gegen den ersten Teil pressen, um Druck auf das Dichtungselement auszuüben, wodurch ein Bewegen der Welle relativ zu dem ersten Teil das Drehen der Welle um die Längsachse und eine Axialverschiebung der Welle umfasst.

## Revendications

1. Dispositif de fixation de système de vide (110) pour fixer de manière libérable une première partie (150) d'un système de vide sur une seconde partie (160) du système de vide, ledit dispositif de fixation comprenant un arbre (112) ayant un axe longitudinal et pourvu d'une pluralité de membres d'application de force (116), ledit arbre devant être fixé sur ladite première partie pour définir un écartement entre ladite première partie et lesdits membres d'application de force pour recevoir ladite seconde partie par un mouvement de ladite seconde partie dans une direction longitudinale dudit arbre ; et ledit arbre pouvant être déplacé par rapport à ladite première partie pour amener lesdits membres d'application de force à rétrécir ledit écartement pour appliquer une force pressant ladite seconde partie vers ladite première partie,
**caractérisé en ce que** le mouvement relatif dudit arbre vers ladite première partie comprend une rotation dudit arbre autour dudit axe longitudinal et une translation axiale de l'arbre ; et dans lequel lesdits membres d'application de force (116) sont des corps annulaires définissant des trous traversants respectifs (134) pour recevoir ledit arbre (112) ; et dans lequel ledit arbre s'étend à travers des trous traversants respectifs (134) desdits membres d'application de force (116) et a des premières (136) et secondes (138) parties de diamètre respectives associées auxdits membres d'application de force, lesdites secondes parties de diamètre étant supérieures auxdites premières parties de diamètre, moyennant quoi une translation axiale dudit arbre par rapport auxdits membres d'application de force peut déplacer lesdits arbres d'une position où lesdites premières parties de diamètre sont reçues dans les trous traversants respectifs (134) à une position où lesdites secondes parties de diamètre sont reçues dans les trous traversants pour provoquer ledit mouvement radialement vers l'extérieur des membres d'application de force.

2. Dispositif de fixation de système de vide selon la revendication 1, dans lequel lesdits arbre (112) et membres d'application de force (116) sont configurés pour appliquer ladite force de pression dans une direction radialement vers l'extérieur par rapport audit axe longitudinal.

3. Dispositif de fixation de système de vide selon la revendication 1, dans lequel ledit arbre est pourvu d'un filetage (126) pouvant se mettre en prise avec un filetage (128) fixé sur ladite première partie moyennant quoi ladite rotation dudit arbre autour dudit axe longitudinal provoque ladite translation axiale dudit arbre.

4. Dispositif de fixation de système de vide selon l'une quelconque des revendications précédentes, comprenant en outre un support (118) pour ledit arbre qui peut être fixé sur ladite première partie, ledit support définissant un alésage (122) où ledit arbre est reçu au moins partiellement et étant pourvu d'ouvertures respectives (124) à travers lesquelles lesdits membres d'application de force font saillie, lesdites ouvertures étant configurées pour limiter un mouvement desdits membres d'application de force dans des directions parallèles audit axe longitudinal, et dans lequel lesdites ouvertures sont chacune partiellement définies par des faces opposées (125) qui limitent un mouvement desdits membres d'application de force dans lesdites directions parallèles audit axe longitudinal.

5. Système de vide comprenant une première partie (150), une seconde partie (160) et un dispositif de fixation (110) selon l'une quelconque des revendications précédentes pour fixer de manière libérable ladite première partie sur ladite seconde partie.

6. Procédé de fixation d'une liaison entre deux parties d'un système de vide en utilisant un dispositif de fixation de vide selon l'une quelconque des revendications 1 à 4, ledit procédé comprenant :
le montage d'un arbre ayant un axe longitudinal et pourvu d'une pluralité de membres d'application de force sur une première partie dudit système de vide pour définir l'écartement entre lesdits membres d'application de force et ladite première partie ;
le déplacement d'une seconde partie dudit système de vide dans ledit écartement le long d'une trajectoire sensiblement parallèle audit axe longitudinal ; et
le déplacement dudit arbre par rapport à ladite première partie pour amener lesdits membres d'application de force à rétrécir ledit écartement et à presser ladite seconde partie vers ladite première partie pour appliquer une pression sur ledit élément d'étanchéité, moyennant quoi le déplacement dudit arbre par rapport à ladite première partie comprend la rotation dudit arbre autour dudit axe longitudinal et la translation axiale dudit arbre.
